# FASCICULE DE BREVET EUROPEEN

(11) **EP 2 803 534 B1**
(45) Date de publication et mention de la délivrance du brevet: **07.02.2018**
(21) Numéro de dépôt: 13167951.6
(22) Date de dépôt: 16.05.2013
(51) Int. Cl.: B60R 9/048

(54) **ELÉMENT DE GALERIE DE TOIT**
DACHTRÄGERELEMENT
ROOF-RACK ELEMENT

(43) Date de publication de la demande: 19.11.2014
(73) Titulaire: ROLIX S.p.r.l., 5310 Waret la Chaussée (Eghezee) (BE)
(72) Inventeur: Burnick, Frank, 5310 Waret la Chaussée (Eghezée) (BE)
(74) Mandataire: Decamps, Alain René François

(56) Documents cités:
- EP-A1- 2 460 691
- WO-A1-84/00931
- FR-A- 1 028 642
- US-A- 4 174 119
- US-A- 4 900 203
- US-A1- 2001 043 845

## Description

La présente invention concerne un élément de galerie de toit pour véhicule.

On connaît la demande de brevet WO 84/00931 A1 qui divulgue une barre de toit transversale pour véhicule d'après la préambule de la revendication 1, formée de 2 pièces parallèles de tuyau, de métal ou de matériau synthétique, la barre étant aussi munie d'une sangle destinée à fixer des objets à transporter. Une roue à rochet permet la tension de la sangle.

Cette barre de toit rend cependant difficile, voire impossible, l'arrimage d'un objet par un opérateur unique situé d'un côté d'un véhicule sans l'obliger à se déplacer de l'autre côté pour fixer l'extrémité de la sangle et la tendre au-dessus de l'objet.

L'invention remédie aux inconvénients des barres de toit connues en fournissant un élément de galerie de toit pour véhicule muni d'un système d'arrimage d'objets à transporter comprenant deux barres transversales parallèles solidaires de montants en forme de panneaux disposés à chacune de leur extrémité et au moins un tendeur de sangle équipé d'une roue à rochet sur laquelle s'enroule une sangle d'arrimage des objets, selon lequel :
a) la roue à rochet est solidaire de la face externe d'un montant;
b) les deux barres sont espacées d'une distance au moins égale à la largeur de la sangle;
c) la roue à rochet comporte un capot muni d'un système d'ancrage de l'extrémité distale de la sangle.

Par rapport aux systèmes connus, l'invention présente les avantages suivants :
- elle convient pour le transport d'objets de forme et de longueur diverses;
- elle permet l'arrimage d'un objet par un seul opérateur placé d'un côté d'un véhicule sans l'obliger à se déplacer de l'autre côté pour arrimer l'objet.

Par élément de galerie de toit pour véhicule, on entend désigner tout fragment ou partie de système de transport de charges ou d'objets au-dessus du toit des véhicules. Les véhicules peuvent être des véhicules automobiles, par exemple des camionnettes, camions ou voitures de tourisme et breaks. Les véhicules peuvent aussi être des véhicules sans moteur, comme des remorques.

Selon l'invention, l'élément de galerie de toit est muni d'un système d'arrimage d'objets à transporter. Un tel système d'arrimage a pour fonction de maintenir les objets sur l'élément de galerie pendant le transport et d'éviter aussi bien leur perte que leur dégradation suite à des mouvements incontrôlés de ces objets par rapport aux éléments constituant la galerie.

Selon l'invention, le système d'arrimage comprend deux barres transversales. Ces barres sont des pièces rigides de forme allongée en ligne droite qui surmontent le toit du véhicule d'une face latérale de celui-ci à l'autre et sont destinées à supporter le poids des objets à transporter. Selon l'invention, les deux barres sont parallèles.

Ces barres transversales sont solidaires de montants en forme de panneaux. Ceux-ci sont disposés à chaque extrémité des deux barres transversales parallèles. Au moins un tendeur de sangle d'arrimage des objets est solidaire aussi des barres transversales. De préférence, le tendeur de sangle est directement solidaire d'un des deux montants, par exemple en étant fixé directement sur celui-ci. De manière préférée, le tendeur de sangle est fixé sur une face du montant située du côté extérieur au véhicule. Par tendeur de sangle, on entend désigner un dispositif capable de régler la longueur disponible d'une sangle et de lui imposer une certaine tension permanente dans une configuration de repos.

Selon l'invention, la sangle d'arrimage des objets est une bande de matière souple qui peut recouvrir un objet en épousant sa morphologie extérieure ou encore être enroulée autour d'un objet. Comme matière souple pour la réalisation de la sangle on peut trouver des textiles tissés ou tricotés, des textiles non tissés ou encore des bandes en matière plastique souple. Les fibres des textiles peuvent indifféremment être naturelles ou artificielles. Des sangles en tissu de nylon ou de tissus en polyester ont donné de bons résultats.

Conformément à l'invention, le tendeur de sangle est équipé d'une roue à rochet. Celle-ci comporte un tambour autour duquel on enroule une extrémité de la sangle de manière à la resserrer autour de l'objet à transporter. Un dispositif à cliquet empêche la détente de la sangle et un ressort permet de la maintenir tendue durant la configuration de repos. Cette roue à rochet est conforme à la description qui en est faite dans la demande de brevet européen EP 1 218 0948.7 où elle est dénommée « mini-treuil ».

Selon une première caractéristique de l'invention, la roue à rochet est solidaire de la face externe d'un montant. Par face externe, on désigne la face du montant située du côté extérieur au véhicule. Tout moyen de solidariser la roue à rochet avec le montant est envisageable comme, par exemple le soudage, le boulonnage, l'insertion dans une glissière située sur le montant,...

Selon une deuxième caractéristique de l'invention, les deux barres transversales sont espacées d'une distance au moins égale à la largeur de la sangle.

Selon une troisième caractéristique de l'invention, la roue à rochet comporte un capot muni d'un système d'ancrage de l'extrémité distale de la sangle constitué d'une protubérance. Le capot de la roue à rochet est un élément de celle-ci constituant la partie externe d'un boîtier dans lequel cette roue peut tourner. Ici aussi, la partie externe fait référence à la partie située du côté extérieur au véhicule. Par extrémité distale de la sangle, on désigne celle des deux extrémités de la sangle qui n'est pas fixée sur le tambour de la roue à rochet.

La sangle est munie d'un moyen d'arrimage à son extrémité distale. Tout moyen d'arrimage capable de s'accrocher au système d'ancrage du capot de la roue à rochet. Des exemples de système d'ancrage des tiges filetées soudées sur le capot, des mousquetons solidaires du capot, des pièces de système Velcro®, qui ne font pas partie de la présente invention. Des exemples de moyen d'arrimage de la sangle sont des oeillets percés dans l'extrémité distale de la sangle, des anneaux ou des crochets fixés à l'extrémité de la sangle, des pièces de système Veicro®... L'association d'une protubérance sur le capot de la roue à rochet et d'un oeillet percé dans la sangle a donné de bons résultats.

Selon un mode de réalisation préféré de l'invention, les deux barres sont espacées d'une distance égale à au moins 105 % de la largeur de la sangle.

Selon un autre mode de réalisation, l'élément de galerie de toit comprend des barres en forme de pièces tubulaires de section circulaire, rectangulaire ou d'un profil particulier. Un tel profil particulier de cette section peut avantageusement comprendre au moins un segment de droite à sa partie supérieure, de telle sorte que les barres présentent une partie plane sur laquelle les objets à arrimer peuvent reposer de manière stable.

Selon un autre mode de réalisation de l'invention, compatible avec les autres modes, les barres sont réalisées en acier, en métal léger ou en alliage métallique léger. Des exemples de tels métaux ou alliages sont les aciers inoxydables et les alliages de chrome-nickel, l'aluminium et les alliages d'aluminium, le laiton et les alliages d'étain. Avantageusement, elles sont en métal léger extrudé ou en alliage métallique léger extrudé.

De la même manière, les montants en forme de panneaux situés de part et d'autre des barres sont aussi avantageusement réalisés en acier, en métal léger ou en alliage métallique léger.

Selon un mode de réalisation préféré des éléments de galerie de toit conforme à l'invention, les barres comprennent des dentelures longitudinales réalisées par extrusion. Ces dentelures sont avantageusement situées dans une partie plane des barres de manière à former une surface antidérapante améliorant l'arrimage des objets.

Un autre mode de réalisation encore des éléments de galerie de toit selon l'invention consiste à monter sur chacun des deux montants situés de part et d'autre des barres un tendeur de sangle équipé d'une roue à rochet.

L'invention consiste aussi en un procédé pour arrimer un objet sur un élément de galerie de toit décrit ci-dessus, selon lequel on cale l'objet dans l'angle formé par un des montants latéraux de l'élément de galerie et une extrémité des barres, on déroule la sangle hors de la roue à rochet, on passe la sangle au-dessus de l'objet, on entoure celui-ci avec la sangle, on glisse ensuite la partie restante de la sangle entre les deux barres et on la fait revenir se fixer sur le capot de la roue à rochet.

L'invention consiste encore en un procédé pour arrimer un objet sur un élément de galerie de toit décrit ci-dessus, selon lequel on cale l'objet dans l'angle formé par un des montants latéraux de l'élément de galerie et une extrémité des barres, on déroule la sangle hors de la roue à rochet et on arrime l'extrémité de la sangle à un endroit sélectionné parmi l'autre montant latéral et le capot d'une deuxième roue à rochet solidaire de cet autre montant.

L'invention consiste enfin en un procédé pour réaliser une galerie de toit sur un véhicule, selon lequel on fixe sur le toit du véhicule au moins deux éléments de galerie de toit conforme à l'invention et décrits ci-dessus.

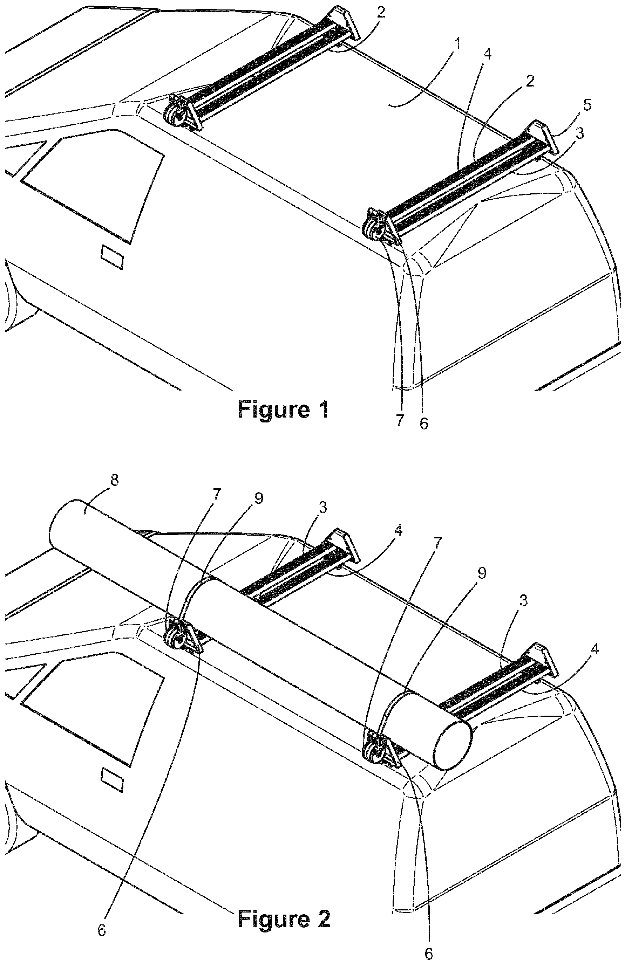

Les figures 1 à 5 qui suivent sont données dans le but d'illustrer l'invention par des exemples pratiques de réalisation, sans vouloir en limiter d'aucune manière sa portée.

La figure 1 représente un véhicule automobile (1) de type camionnette équipé d'une galerie de toit comprenant deux éléments (2) de galerie de toit conformes à l'invention. Pour chaque élément de galerie, on y distingue les deux barres parallèles (3) et (4) qui présentent un profil plan à leur partie supérieure. Des montants en forme de panneaux (5) et (6) sont placés à chaque extrémité des barres (3) et (4). Sur le panneau gauche (6), une roue à rochet (7), solidaire de ce panneau fait office de distributeur et tendeur de sangle (non visible à la figure 1).

A la figure 2, on a représenté le même véhicule (1) équipé de la même galerie de toit qu'à la figure 1. Cette galerie supporte et arrime une charge (8) qui est une portion de conduite tubulaire cylindrique. On distingue sur cette figure les sangles (9) déroulées hors des roues à rochet (7) qui viennent enserrer la conduite (8) et l'arriment sur la galerie en la calant entre les barres (3, 4) et les montants (6).

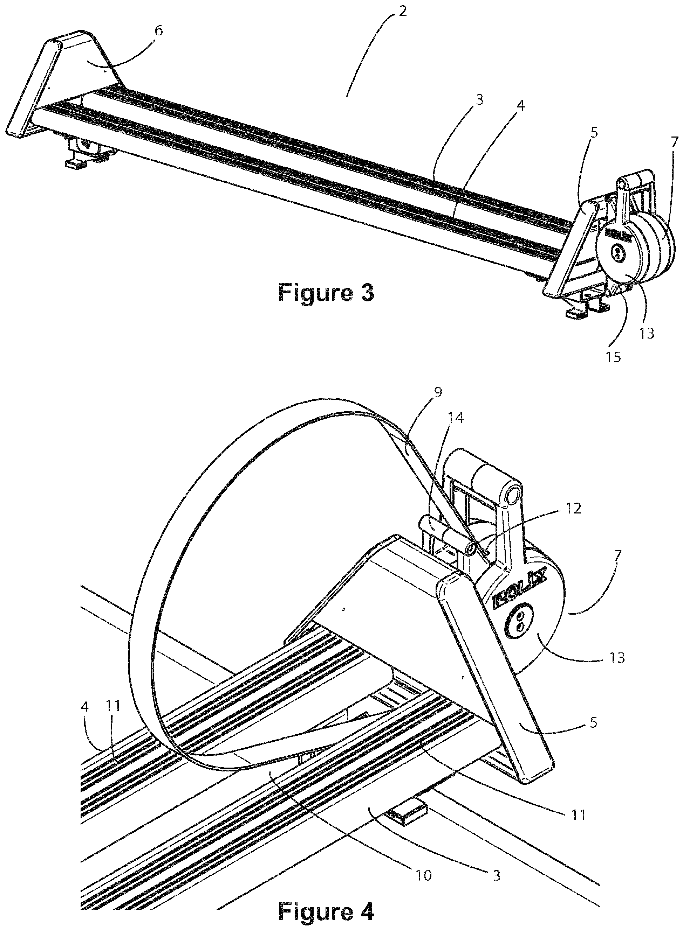

La figure 3 est une vue agrandie de l'élément de galerie de toit (2) illustrant les barres (3) et (4), les montants (5) et (6) et la roue à rochet (7). Une protubérance (15) située sur la partie inférieure du capot (13) de la roue à rochet permet l'arrimage de l'extrémité distale d'une sangle (non représentée sur cette figure).

La figure 4 illustre en détail le chemin de placement de la sangle (9) autour de l'objet à arrimer (non représenté pour plus de clarté). Sur cette figure, on distingue clairement l'espace (10) résultant de l'écartement des barres parallèles (3) et (4). Les dentelures longitudinales (11) des barres sont aussi bien visibles. On y distingue également la sangle (9) quittant le capot (13) de la roue à rochet (7) et s'appuyant sur un guide (14) solidaire du capot (13), ensuite s'enroulant autour de l'objet à arrimer et revenant en arrière pour se glisser dans l'espace (10) entre les deux barres (3) et (4), et venir s'arrimer sur la protubérance (15) visible sur la figure 3.

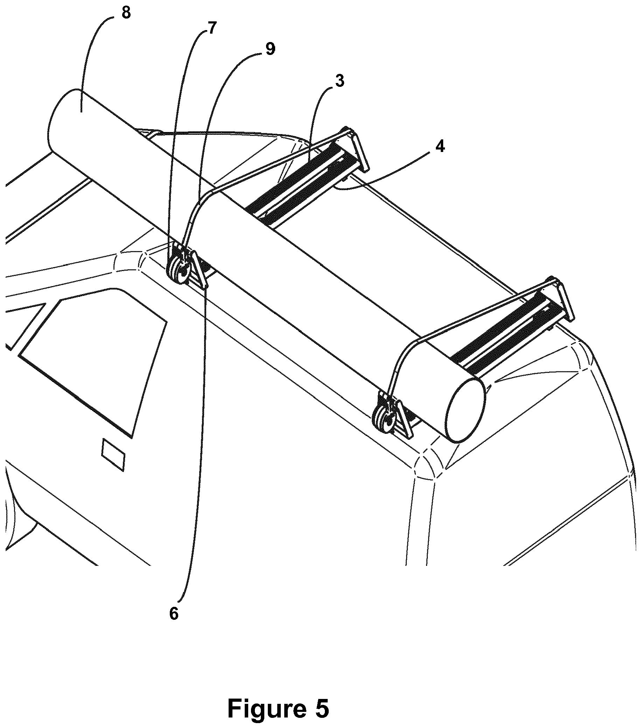

La figure 5 est analogue à la figure 2 où le calage de la charge tubulaire (8) se fait par l'arrimage de l'extrémité distale de la sangle sur l'autre montant latéral, opposé à la roue à rochet (7) d'où a été déroulée la sangle (9).

Les mêmes références chiffrées ont été gardées pour les éléments qui se correspondent dans les 5 figures.

## Revendications

1. Elément (2) de galerie de toit pour véhicule (1) muni d'un système d'arrimage d'objets à transporter comprenant deux barres (3, 4) transversales parallèles solidaires de montants (5, 6) en forme de panneaux disposés à chacune de leur extrémité et au moins un tendeur de sangle équipé d'une roue à rochet (7) sur laquelle s'enroule une sangle (9) d'arrimage des objets (8), **caractérisé en ce que** :
a) la roue à rochet (7) est solidaire de la face externe d'un montant (5);
b) les deux barres (3, 4) sont espacées d'une distance au moins égale à la largeur de la sangle (9);
c) la roue à rochet (7) comporte un capot (13) muni d'un système d'ancrage de l'extrémité distale de la sangle (9) constitué d'une protubérance (15) située à la base inférieure du capot (13) de la roue à rochet (7) sur laquelle peut s'arrimer un crochet ou un oeillet porté ou fixé à l'extrémité de la sangle (9).

2. Elément (2) de galerie de toit selon la revendication précédente, **caractérisé en ce que** la sangle (9) est une bande de matière textile ou de matière plastique souple.

3. Elément (2) de galerie de toit selon une quelconque des revendications précédentes, **caractérisé en ce que** les deux barres (3, 4) sont espacées d'une distance (10) égale à au moins 105 % de la largeur de la sangle (9).

4. Elément (2) de galerie de toit selon une quelconque des revendications précédentes, **caractérisé en ce que** les barres (3, 4) sont des pièces tubulaires de section circulaire, rectangulaire ou d'un profil particulier.

5. Elément (2) de galerie de toit selon la revendication précédente, **caractérisé en ce que** le profil particulier de la section des pièces tubulaires comprend au moins un segment de droite à sa partie supérieure.

6. Elément (2) de galerie de toit selon une quelconque des revendications précédentes, **caractérisé en ce que** les barres (3, 4) sont réalisées en métal léger ou en alliage métallique léger.

7. Elément (2) de galerie de toit selon la revendication précédente, **caractérisé en ce que** les barres (3, 4) sont réalisées en acier, en métal léger extrudé ou en alliage métallique léger extrudé.

8. Elément (2) de galerie de toit selon la revendication précédente, **caractérisé en ce que** les barres (3, 4) comprennent des dentelures longitudinales réalisées par extrusion.

9. Elément (2) de galerie de toit selon une quelconque des revendications précédentes, **caractérisé en ce que** les montants (5, 6) en forme de panneaux sont réalisés en acier, en métal léger ou en alliage métallique léger.

10. Elément (2) de galerie de toit selon une quelconque des revendications précédentes, **caractérisé en ce que** les montants (5, 6) situés de part et d'autre des barres (3, 4) comportent chacun un tendeur de sangle équipé d'une roue à rochet (7).

11. Procédé pour arrimer un objet (8) sur un élément (2) de galerie de toit selon une quelconque des revendications précédentes, **caractérisé en ce qu'**on cale l'objet (8) dans l'angle formé par un des montants latéraux (5, 6) de l'élément (2) de galerie et une extrémité des barres (3, 4), on déroule la sangle (9) hors de la roue à rochet (7), on passe la sangle (9) au-dessus de l'objet (8), on entoure celui-ci avec la sangle (9), on glisse ensuite la partie restante de la sangle (9) entre les deux barres (3, 4) et on la fait revenir se fixer sur le capot (13) de la roue à rochet (7).

12. Procédé pour arrimer un objet (8) sur un élément (2) de galerie de toit selon une quelconque des revendications 1 à 10, **caractérisé en ce qu'**on cale l'objet (8) dans l'angle formé par un des montants latéraux (5, 6) de l'élément (2) de galerie et une extrémité des barres (3, 4), on déroule la sangle (9) hors de la roue à rochet (7) et on arrime l'extrémité de la sangle (9) à un endroit sélectionné parmi l'autre montant latéral et le capot d'une deuxième roue à rochet solidaire de cet autre montant.

13. Procédé pour réaliser une galerie de toit sur un véhicule (1), **caractérisé en ce qu'**on fixe sur le toit du véhicule (1) au moins deux éléments (2) de galerie de toit selon une quelconque des revendications 1 à 10.

## Patentansprüche

1. Dachgepäckträgerelement (2) für ein Fahrzeug (1) mit einem System zur Sicherung von transportierten Gegenständen, bestehend aus zwei parallelen Querstangen (3,4), die verbunden sind mit zwei plattenförmigen Stützen (5,6), die an deren jeweiligen Enden angeordnet sind und mindestens einem Gurtspanner, der mit einem Sperrrad (7) versehen ist, auf dem ein Spanngurt (9) zur Sicherung der Gegenstände (8) **dadurch gekennzeichnet**:
a) das Sperrrad (7) an der Außenfläche einer Stütze (5) befestigt ist;
b) der Abstand zwischen den Stangen mindestens der Breite des Spanngurts (9) entspricht;
c) das Sperrrad (7) eine Abdeckung aufweist, die mit einem Verankerungssystem für das distale Ende des Spanngurts (9) versehen ist, das aus einer Vorwölbung (15) besteht, die an der unteren Grundfläche der Abdeckung (13) des Sperrrades (7) angeordnet ist, und an der ein Haken oder eine Öse befestigt werden kann, wobei der Haken oder die Öse am Ende des Spanngurtes (9) anzubringen ist.

2. Dachgepäckträgerelement (2) nach vorstehender Anforderung, **dadurch gekennzeichnet, dass** der Spanngurt (9) aus textilem Gewebe oder aus flexiblem Kunststoffmaterial besteht.

3. Dachgepäckträgerelement (2) nach einer der vorstehenden Anforderungen, **dadurch gekennzeichnet, dass** die beiden Stangen (3,4) in einem Abstand (10) voneinander angeordnet sind, der mindestens 105 % der Spanngurtbreite (9) entspricht.

4. Dachgepäckträgerelement (2) nach einer der vorstehenden Anforderungen, **dadurch gekennzeichnet, dass** die Stangen (3,4) Rohrstücke mit kreisförmigem, rechteckigem Querschnitt oder eines speziellen Profils sind.

5. Dachgepäckträgerelement (2) nach vorstehender Anforderung, **dadurch gekennzeichnet, dass** das spezielle Profil des Querschnitts der Rohrstücke an seinem oberen Teil mindestens ein gerades Segment aufweist.

6. Dachgepäckträgerelement (2) nach einer der vorstehenden Anforderungen, **dadurch gekennzeichnet, dass** die Stangen (3,4) aus Leichtmetall oder Leichtmetalllegierung hergestellt sind.

7. Dachgepäckträgerelement (2) nach vorstehender Anforderung, **dadurch gekennzeichnet, dass** die Stangen (3,4) aus Stahl, stranggepresstem Leichtmetall oder extrudierter Leichtmetalllegierung hergestellt sind.

8. Dachgepäckträgerelement (2) nach vorstehender Anforderung, **dadurch gekennzeichnet, dass** die Stangen (3,4) im Strangpressverfahren hergestellte Längsverzahnungen aufweisen.

9. Dachgepäckträgerelement (2) nach einer der vorstehenden Anforderungen, **dadurch gekennzeichnet, dass** die plattenförmigen Stützen (5,6) aus Stahl, Leichtmetall oder Leichtmetalllegierung hergestellt sind.

10. Dachgepäckträgerelement (2) nach einer der vorstehenden Anforderungen, **dadurch gekennzeichnet, dass** die Stützen (5,6), die sich zu beiden Seiten der Stangen (3,4) befinden, je einen Gurtspanner mit einem Sperrrad (7) aufweisen.

11. Verfahren zum Befestigen eines Gegenstandes (8) auf einem Dachgepäckträgerelement (2) nach einer der vorstehenden Anforderungen, **dadurch gekennzeichnet, dass** der Gegenstand (8) in dem Winkel positioniert wird, der durch eine der seitlichen Stützen (5,6) des Dachgepäckträgerelements (2) und ein Ende der Stangen (3, 4) gebildet wird, dass der Spanngurt (9) aus dem Sperrrad (7) herausgerollt wird, dass der Spanngurt (9) über den Gegenstand (8) geführt wird, dass dieser von dem Spanngurt (9) umschlossen wird und dass dann der übrige Teil des Spanngurts (9) zwischen die beiden Stangen (3, 4) geschoben wird und dann zurückgeführt und auf der Abdeckung (13) des Sperrrads (7) befestigt wird.

12. Verfahren zum Befestigen eines Gegenstandes (8) an einem Dachgepäckträgerelement (2) nach einer der vorstehenden Anforderungen 1 bis 10, **dadurch gekennzeichnet, dass** der Gegenstand (8) in dem Winkel positioniert wird, der durch eine der seitlichen Stützen (5, 6) des Trägerelements (2) und ein Ende der Stangen (3, 4) gebildet wird, dass der Spanngurt (9) aus dem Sperrrad (7) ausgerollt wird und dass das Ende des Spanngurts (9) an einer Position gesichert wird, die sich zwischen der weiteren Seitenstütze und der Abdeckung eines zweiten Sperrrades befindet, dass mit dieser weiteren Stütze verbunden ist.

13. Verfahren zur Anbringung eines Dachgepäckträgers auf einem Fahrzeug (1), **dadurch gekennzeichnet, dass** auf dem Dach des Fahrzeugs (1) mindestens zwei Dachgepäckträgerelemente (2) nach einer der vorstehenden Anforderungen 1 bis 10 befestigt werden.

## Claims

1. Roof rack element (2) for vehicle (1) fitted with a system for securing items to be transported comprising two parallel cross bars (3, 4) integral with supports (5, 6) in the form of panels at each end and at least one strap tensioner having a ratchet wheel (7) round which is wound a strap (9) for securing the items (8), **characterised in that**:
a) the ratchet wheel (7) is integral with the outer face of a support (5);
b) the two bars are spaced apart at a distance at least equal to the width of the strap (9);
c) the ratchet wheel (7) has a cover with a system for anchoring the distal end of the strap (9) comprising a projection (15) at the bottom base of the cover (13) of the ratchet wheel (7) to which a hook or eye attached or fixed to the end of the strap (9) can be secured.

2. Roof rack element (2) according to the previous claim, **characterised in that** the strap (9) is a textile or flexible plastic strap.

3. Roof rack element (2) according to either one of the previous claims, **characterised in that** the two bars (3, 4) are spaced apart at a distance (10) equal to at least 105 % of the width of the strap (9).

4. Roof rack element (2) according to any of the previous claims, **characterised in that** the bars (3, 4) are tubular pieces with a cross section that is round, rectangular or of a specific profile.

5. Roof rack element (2) according to the previous claim, **characterised in that** the specific profile of the cross section of the tubular pieces has at least one segment perpendicular to its upper part.

6. Roof rack element (2) according to any of the previous claims, **characterised in that** the bars (3, 4) are made of lightweight metal or lightweight metal alloy.

7. Roof rack element (2) according to the previous claim, **characterised in that** the bars (3, 4) are made of steel, extruded lightweight metal or extruded lightweight metal alloy.

8. Roof rack element (2) according to the previous claim, **characterised in that** the bars (3, 4) have longitudinal indentations made by extrusion.

9. Roof rack element (2) according to any of the previous claims, **characterised in that** the supports (5, 6) in the form of panels are made of steel, lightweight metal or lightweight metal alloy.

10. Roof rack element (2) according to any of the previous claims, **characterised in that** the supports (5, 6) located on either side of the bars (3, 4) each have a strap tensioner with a ratchet wheel (7).

11. Procedure for securing an item (8) on to a roof rack element (2) according to any of the previous claims, **characterised in that** the item (8) is wedged into the angle formed by one of the side supports (5, 6) of the roof rack element (2) and one end of the bars (3, 4), the strap (9) is unwound from the ratchet wheel (7), the strap (9) is passed over the top of the item (8), which is then encircled by the strap (9), the remaining section of the strap (9) is then inserted between the two bars (3, 4) and returned to fix on to the cover (13) of the ratchet wheel (7).

12. Procedure for securing an item (8) on to a roof rack element (2) according to any of the claims 1 to 10, **characterised in that** the item (8) is wedged into the angle formed by one of the side supports (5, 6) of the roof rack element (2) and one end of the bars (3, 4), the strap (9) is unwound from the ratchet wheel (7) and the end of the strap (9) is secured to a point chosen between the other side support and the cover of a second ratchet wheel integral with this other support.

13. Procedure for installing a roof rack on a vehicle (1), **characterised in** this at least two roof rack elements (2) according to any of the claims 1 to 10 are fixed on to the roof of the vehicle (1).
